# FASCICULE DE BREVET EUROPEEN

(11) **EP 2 895 391 B1**
(45) Date de publication et mention de la délivrance du brevet: **05.02.2020**
(21) Numéro de dépôt: 13773289.7
(22) Date de dépôt: 12.09.2013
(51) Int. Cl.: B64D 27/26

(54) **PYLONE DE MONTAGE D'UN MOTEUR A LA STRUCTURE D'UN AERONEF**
PYLON ZUR MONTAGE EINES MOTORS AUF EINER FLUGZEUGSTRUKTUR
PYLON FOR MOUNTING AN ENGINE ON THE STRUCTURE OF AN AIRCRAFT

(30) Priorité: 13.09.2012 FR 1258627
(43) Date de publication de la demande: 22.07.2015
(73) Titulaire: Safran Aircraft Engines, 75015 Paris (FR)
(72) Inventeur: GALLET, François, F-77550 Moissy-Cramayel cedex (FR); JOYEZ, Patrick, F-77550 Moissy-Cramayel cedex (FR)
(74) Mandataire: Gevers & Orès
(86) Numéro de dépôt international: PCT/FR2013/052101
(87) Numéro de publication internationale: WO 2014/041310

(56) Documents cités:
- EP-A1- 2 030 892
- FR-A1- 2 917 379
- US-A- 5 775 638
- US-A1- 2011 259 996

## Description

### Domaine de l'invention

La présente invention se rapporte au montage d'un moteur de propulsion à la structure d'un aéronef. Elle concerne en particulier le montage d'un moteur comprenant une hélice amont.

### Etat de l'art et exposé du problème

Les moteurs de propulsion des aéronefs peuvent être montés à différents endroits du fuselage ou de la voilure. Quand ils sont montés en suspension sous les ailes, un pylône ou mat les relie à la structure de l'aile par la face inférieure de celle-ci. Pour des raisons d'espace et de contraintes aérodynamiques, les moteurs s'étendent au moins en partie en amont au-delà du bord d'attaque de l'aile à laquelle ils sont suspendus.

Le document EP 2 030 892 A1 qui décrit toutes les caractéristiques techniques du préambule de la revendication 1 est considéré comme le document de l'art antérieur le plus proche.

La présente invention vise en particulier les moteurs comprenant une hélice en position amont. Il peut s'agir d'une hélice simple, telle que dans un turbopropulseur ou d'une hélice double formée de deux rotors contrarotatifs. L'invention vise plus particulièrement un moteur à hélice transsonique que l'on désigne aussi moteur à soufflante non carénée ou « open rotor ». L'hélice est entraînée par un moteur qui est généralement à turbine à gaz et situé dans son prolongement axial.

Ces derniers moteurs présentent un grand intérêt car leur consommation spécifique est très favorable et leur utilisation conduit à des économies de carburant. Toutefois cette configuration en suspension sous l'aile est pénalisante sur le plan acoustique, en raison du fait que lorsque l'aéronef suit une trajectoire ascendante, au décollage notamment, en étant incliné par rapport à sa composante de déplacement horizontal, l'hélice subit un flux d'air dont la direction forme un angle non nul avec son axe de rotation.

Le présent déposant s'est fixé comme objectif d'améliorer l'écoulement aérodynamique autour du moteur quand l'aéronef est en phase de montée et suit une trajectoire ascendante.

### Exposé de l'invention

On parvient à cet objectif avec un ensemble d'un moteur de propulsion avec son pylône et d'un système d'accrochage du pylône selon la revendication 1. Le système d'accrochage d'un pylône de montage d'un moteur de propulsion à la structure d'un aéronef, en particulier à sa voilure, comprendant un premier moyen d'attache, le premier moyen d'attache étant apte à être fixé au pylône et un second moyen d'attache, le second moyen d'attache étant apte à être fixé à la structure de l'aéronef.

L'ensemble ci-dessus est caractérisé par le fait qu'il comprend un moyen de liaison déformable reliant le premier moyen d'attache au second moyen d'attache, le moyen de liaison étant agencé pour autoriser le déplacement du premier moyen d'attache par rapport au second moyen d'attache entre une première et une seconde positions quand la poussée du moteur dépasse un seuil déterminé.

Pour le moteur suspendu à la voilure de l'aéronef par un tel système d'accrochage du pylône, il est ainsi possible d'adapter de manière optimale sa position par rapport à la direction du vol tout en réduisant la traînée d'interaction avec la voilure. En outre l'écoulement aérodynamique étant amélioré, l'impact acoustique de l'hélice en est réduit.

Par ailleurs le basculement du moteur induit une augmentation de la portance de l'aile. Cela contribue à limiter la longueur de piste nécessaire au décollage de l'aéronef.

Conformément à une autre caractéristique, la première position des premiers moyens d'attache correspond à une position du moteur lorsque l'aéronef est en vol de croisière et la seconde position correspond à une position du moteur lorsque l'aéronef suit une trajectoire ascendante, en particulier au décollage.

Conformément à l'invention, le moyen de liaison forme une structure trapézoïdale déformable avec deux sommets du trapèze fixes par rapport au premier moyen d'attache et deux autres sommets du trapèze fixes par rapport au second moyen d'attache.

Avantageusement, le moyen de liaison comprend un amortisseur de mouvement. Un tel amortisseur a pour fonction d'assurer une déformation souple et continue, sans à coup, du moyen de liaison. Eventuellement l'amortisseur est associé à un organe de rappel dans la première position en l'absence d'effort tendant à la déplacer vers la seconde position. On garantit ainsi une position de sécurité en cas de panne.

Selon un mode de réalisation, la déformation du moyen de liaison est commandée par un actionneur. Il est ainsi possible de piloter de manière manuelle la position du moteur par rapport à la voilure.

Le moyen de liaison est ainsi agencé par rapport au moteur pour autoriser le déplacement du premier moyen d'attache par rapport au second moyen d'attache quand il est soumis à un effort suffisant, correspondant à la poussée exercée sur le premier moyen d'attache, cette poussée excédant un seuil. Le seuil correspond de préférence à la poussée du moteur en phase de montée de l'aéronef.

Selon un mode de réalisation, l'effort de basculement auquel le moteur est soumis est la force résultante de la poussée et du poids du moteur.

L'invention trouve une application particulière pour un moteur à hélice amont, notamment pour un moteur est à hélice transsonique.

### Brève description des figures

L'invention sera mieux comprise, et d'autres buts, détails, caractéristiques et avantages de celle-ci apparaîtront plus clairement avec la description explicative détaillée qui suit, d'un mode de réalisation de l'invention donné à titre d'exemple purement illustratif et non limitatif, en référence aux dessins schématiques annexés.

### Sur ces dessins :

La figure 1 représente schématiquement un moteur à hélices contrarotatives monté sous une aile conformément à l'invention et en position croisière ;
La figure 2 montre le moteur de la figure 1 basculé en position inclinée par rapport à l'aile.

### Description d'un mode de réalisation de l'invention.

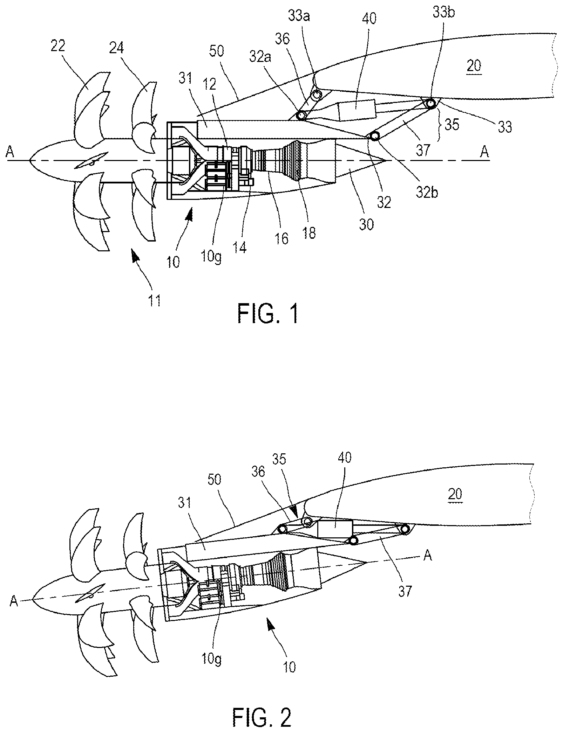

En référence à la figure 1, on peut apercevoir un turbomoteur 10 du type à « open rotor » - cette expression désigne un doublet d'hélices non carénées. Le doublet d'hélice 11 est disposé en amont du moteur dans le prolongement de son axe de rotation. Celui-ci comporte d'amont en aval, dans le sens d'écoulement des gaz à l'intérieur du moteur, des entrées d'air communiquant avec un compresseur 12, une chambre annulaire de combustion 14, et deux turbines 16 et 18. Les turbines sont reliées chacune à l'un des rotors 22, 24 de l'hélice qu'elles entraînent.

Le flux d'air qui pénètre dans le compresseur 12 est comprimé puis est mélangé à du carburant et brûlé dans la chambre de combustion 14. Les gaz de combustion sont ensuite injectés dans les turbines pour entraîner en rotation les rotors de l'hélice qui fournissent la majeure partie de la poussée générée par le moteur. Les gaz de combustion sortent des turbines et sont expulsés à travers une tuyère 30 pour augmenter la poussée.

Les hélices 22, 24 sont coaxiales et disposées l'une derrière l'autre. De façon connue, chacune de ces hélices 22, 24 comporte une pluralité de pales qui sont régulièrement réparties autour de l'axe AA du moteur. Chaque pale s'étend sensiblement radialement dans un plan perpendiculaire à l'axe de rotation, et comporte un bord amont formant le bord d'attaque de la pale, un bord aval formant le bord de fuite, une extrémité radialement interne formant le pied de la pale, et une extrémité radialement externe formant la tête de la pale.

Le moteur est suspendu à une aile 20 d'un aéronef par l'intermédiaire d'un pylône 31. Ce pylône comprend des attaches au moteur, non détaillées ici, d'une part et un système d'accrochage à la structure de l'aile d'autre part. Le système d'accrochage comprend des premier (32) et second (33) moyens d'attache et un moyen de liaison (35) entre eux. Le premier moyen d'attache (32) est représenté ici par des chapes articulées sur le pylône 31 qui est lui-même fixé en divers endroits du carter du moteur. Le second moyen d'attache (33) est représenté ici par des chapes articulées, solidaires de la structure de l'aile 20. Ces moyens d'attaches sont représentés schématiquement et peuvent être réalisés par tout moyen à la portée de l'homme du métier.

Conformément à l'invention, un moyen de liaison 35 déformable relie les deux moyens d'attaches 32 et 33. Ce moyen de liaison comprend, selon le mode de réalisation de cet exemple, deux bielles rigides 36 et 37 articulées respectivement sur les moyens d'attache 32 et 33, de manière à former un quadrilatère trapézoïdal déformable. Les longueurs de ces bielles seront calculées en fonction du type de mouvement désiré pour le moteur. Sur l'exemple des figures 1 et 2, la bielle aval 37 est la plus longue, de façon à ce que le moteur s'incline vers le bas quand il avance. Les quatre sommets du quadrilatère sont 32a et 32b sur le premier moyen d'attache, au moteur, et 33a et 33b sur le second moyen d'attache, à la structure de l'aile. Ainsi si on considère que la structure de l'aile est fixe, les premiers moyens d'attache 32 peuvent se déplacer relativement à la structure de l'aile.

Le quadrilatère trapézoïdal est situé en arrière du centre gravité 10g du moteur 10. De cette façon au repos le poids du moteur tend à le ramener en arrière. Il vient en appui contre des butées, non représentées, sur les articulations par exemple qui le maintiennent dans une première position basse telle que représentée sur la figure 1. Dans cette première position le moteur est d'axe AA horizontal. C'est la position lorsque l'aéronef est au sol à l'arrêt (supposé horizontal) et en vol de croisière.

Par la déformation du quadrilatère trapézoïdal autour des points fixes que constituent les seconds moyens d'attache 33 à la structure de l'aile, le moteur peut prendre une seconde position dite de décollage, qui est représentée sur la figure 2. Comme les deux bielles ne sont pas de longueur égale entre les attaches, leur pivotement autour des articulations sur la structure de l'aile entraîne le basculement du moteur vers le bas.

Un organe amortisseur 40 est disposé à l'intérieur du quadrilatère entre deux sommets opposés de manière à assurer un déplacement souple et sans à coup. Eventuellement l'amortisseur est associé à un élément de rappel, tel qu'un ressort pour équilibrer les efforts et de manière à assurer une position de rappel automatique en cas de panne.

Un carénage 50, de souplesse et déformation appropriées, entoure avantageusement les éléments du pylône de manière à assurer une bonne qualité de l'écoulement aérodynamique au dessus du moteur. Ce carénage est à géométrie variable pour s'adapter aux diverses configurations du trapèze déformable.

Le passage de la position basse à la seconde position est rendu possible selon un mode de réalisation préféré par la variation de poussée exercée sur la structure de l'aile par le moteur entre l'arrêt et le vol de croisière d'une part et la phase de décollage de l'aéronef, d'autre part. Dans le premier cas la poussée est nulle ou faible. Sous les efforts de gravité le moteur se place en position basse et le moyen de liaison 35 est en compression. En effet l'ensemble est agencé de manière à ce que le moment exercé par la poussée sur le moyen de liaison soit en opposition avec le moment exercé par le poids du moteur au centre de gravité 10g.

Lorsque l'aéronef est en phase de vol ascendant, au décollage notamment, la poussée est importante. Le moteur tire fortement sur le pylône. Le moment exercé par la poussée surmonte celui du poids. Le quadrilatère se déforme et vient en butée dans une seconde position. L'axe AA du moteur a basculé pour prendre une position formant un angle déterminé avec celui de l'aile.

Dans cette position le moteur est incliné et son hélice souffle directement sur l'aile avec une incidence qui entraîne une augmentation de la portance de l'aile. Cela contribue à limiter la longueur de piste nécessaire au décollage de l'aéronef. Par ailleurs l'angle d'incidence du flux d'air vu par l'aéronef est réduit par rapport à celui vu par une hélice non inclinée. Cela permet de limiter le moment 1P que l'hélice exerce sur la structure de l'aile. Il s'agit du moment généré par l'hélice, selon une direction orthogonale à son axe de rotation, quand celle-ci subit un flux incliné par rapport à son axe de rotation

La forme du cône d'échappement du flux primaire du moteur est adaptée pour éviter que les gaz du flux primaire viennent brûler la paroi de l'aile lorsque le moteur est en position de traction forte.

Dans ce mode de réalisation, la position du moteur est gérée par la seule poussée. Un actionneur n'est pas requis dans cette solution simple et fiable.

Il entre cependant dans le cadre de l'invention de prévoir une solution avec un actionneur approprié, non illustré, qui permettrait de piloter la position du moteur indépendamment de la valeur de la poussée, en fonction des différentes phases de vol et d'assurer le cas échéant des blocages de la position du moteur.

La solution de l'invention a été illustrée de manière schématique par deux seules bielles formant un quadrilatère, l'invention comprend des solutions équivalentes dans la mesure où le moyen de liaison est déformable.

## Revendications

1. Ensemble d'un moteur de propulsion (10) d'un aéronef et d'un système d'accrochage d'un pylône (31) de montage du moteur (10) à la structure d'un aéronef, en particulier à sa voilure, le système d'accrochage comprenant un premier moyen d'attache (32), fixé au pylône et un second moyen d'attache (33), le second moyen d'attache étant apte à être fixé à la structure de l'aéronef, un moyen de liaison (35) reliant le premier au second moyen d'attache, le moyen de liaison (35) étant agencé pour autoriser le déplacement du premier moyen d'attache par rapport au second moyen d'attache entre une première et une seconde positions quand la poussée exercée par le moteur dépasse un seuil déterminé, **caractérisé par le fait que** le moyen de liaison (35) comprend deux bielles rigides (36, 37), dont une bielle amont (36) et une bielle aval (37), articulées sur les moyens d'attache (32, 33), de manière à former une structure trapézoïdale déformable, avec deux sommets (32a, 32b) du trapèze qui sont fixes par rapport au premier moyen d'attache (32) et qui sont disposés longitudinalement par rapport à l'axe (AA) du moteur (10), et avec deux autres sommets (33a, 33b) du trapèze qui sont fixes par rapport au second moyen d'attache (33) et qui sont disposés longitudinalement par rapport à l'axe (AA) du moteur (10), et **par le fait que** la bielle aval (37) est plus longue que la bielle amont (36), de manière à ce que le moteur (10) s'incline vers le bas quand il avance.

2. Ensemble selon la revendication 1 dont la première position des moyens d'attache correspond à une position d'arrêt ou de vol de croisière et la seconde position correspond à une position de montée de l'aéronef.

3. Ensemble selon l'une des revendications précédentes dont le moyen de liaison (35) comprend un amortisseur de mouvement (40), éventuellement associé à un organe de rappel dans la première position.

4. Ensemble selon l'une des revendications précédentes, comprenant un actionneur commandant le passage de la première position à la seconde position et inversement.

5. Ensemble selon la revendication 1 dont le seuil correspond à une phase de vol ascendant.

6. Ensemble selon l'une des revendications 1 à 5 dont le moteur est à hélice amont, en particulier à hélice transsonique amont.

## Patentansprüche

1. Montage eines Antriebsmotors (10) eines Luftfahrzeugs und eines Kopplungssystems einer Pylone (31) zum Montieren des Motors (10) an der Struktur eines Luftfahrzeugs, insbesondere an seine Tragfläche, wobei das Kopplungssystem ein erstes Anbringungsmittel (32) umfasst, das an der Pylone befestigt ist, und ein zweites Anbringungsmittel (33), wobei das zweite Anbringungsmittel geeignet ist, an der Struktur des Luftfahrzeugs befestigt zu sein,
ein Verbindungsmittel (35), das das erste mit dem zweiten Anbringungsmittel verbindet, wobei das Verbindungsmittel (35) eingerichtet ist, um die Verlagerung des ersten Anbringungsmittels bezüglich des zweiten Anbringungsmittels zwischen einer ersten und einer zweiten Position zu gestatten, wenn der Schub, der von dem Motor ausgeübt wird, einen bestimmten Schwellenwert überschreitet,
**dadurch gekennzeichnet, dass** das Verbindungsmittel (35) zwei starre Pleuel (36, 37) umfasst, darunter einen stromaufwärtigen Pleuel (36) und einen stromabwärtigen Pleuel (37), die auf den Anbringungsmitteln (32, 33) derart angelenkt sind, dass sie eine verformbare Trapezstruktur bilden, mit zwei Gipfeln (32a, 32b) des Trapezes, die bezüglich des ersten Anbringungsmittels (32) stationär sind, und die längs bezüglich der Achse (AA) des Motors (10) angeordnet sind, und mit zwei anderen Gipfeln (33a, 33b) des Trapezes, die bezüglich des zweiten Anbringungsmittels (33) stationär sind, und die längs bezüglich der Achse (AA) des Motors (10) angeordnet sind, und dadurch, dass der stromabwärtige Pleuel (37) länger ist als der stromaufwärtige Pleuel (36), so dass sich der Motor (10) beim Vorlaufen nach unten neigt.

2. Montage nach Anspruch 1, deren erste Position der Anbringungsmittel einer Stillstand- oder Reiseflugposition entspricht, und deren zweite Position einer Steigposition des Luftfahrzeugs entspricht.

3. Montage nach einem der vorstehenden Ansprüche, deren Verbindungsmittel (35) einen Bewegungsdämpfer (40), der eventuell mit einem Organ zum Zurückstellen in die erste Position assoziiert ist, umfasst.

4. Montage nach einem der vorstehenden Ansprüche, die einen Aktuator umfasst, der den Übergang von der ersten Position auf die zweite Position und umgekehrt steuert.

5. Montage nach Anspruch 1, deren Schwellenwert einer Aufwärtsflugphase entspricht.

6. Montage nach einem der Ansprüche 1 bis 5, deren Motor mit einem stromaufwärtigen Propeller, insbesondere mit einem stromaufwärtigen transsonischen Propeller ausgebildet ist.

## Claims

1. Propulsion engine assembly (10) of an aircraft and of a pylon attachment system (31) for mounting the engine (10) on the structure of an aircraft, in particular to the wings thereof, the attachment means comprising a first attachment means (32), fixed to the pylon and a second attachment means (33), the second attachment means being capable of being fixed to the structure of the aircraft, a connection means (35) connecting the first and second attachment means, the connection means (35) being arranged to enable the movement of the first attachment means with respect to the second attachment means between a first and a second positions when the thrust exerted by the engine exceeds a determined threshold, **characterised by** the fact that the connection means (35) comprises two rigid connecting rods (36, 37), of which one upstream connecting rod (36) and one downstream connecting rod (37), articulated on the attachment means (32, 33), so as to form a deformable trapezoidal structure, with two vertices (32a, 32b) of the trapeze which are fixed with respect to the first attachment means (32) and which are arranged longitudinally with respect to the axis (AA) of the engine (10), and with two other vertices (33a, 33b) of the trapeze that are fixed with respect to the second attachment means (33) and which are arranged longitudinally with respect to the axis (AA) of the engine (10), and by the fact that the downstream connecting rod (37) is longer than the upstream connecting rod (36), such that the engine (10) is inclined downwards when it moves forward.

2. Assembly according to claim 1, wherein the first position of the attachment means corresponds to a stopped or cruising-flight position and the second position corresponds to a climbing position of the aircraft.

3. Assembly according to any of the preceding claims, wherein the connection means (35) comprises a movement damper (40), optionally associated with a member for returning to the first position.

4. Assembly according to any of the preceding claims, comprising an actuator controlling the change from the first position to the second position and vice versa.

5. Assembly according to claim 1, wherein the threshold corresponds to an ascending flight phase.

6. Assembly according to any of claims 1 to 5, wherein the engine has an upstream propeller, in particular a transonic upstream propeller.
